# EUROPÄISCHE PATENTSCHRIFT

(11) **EP 0 826 575 B1**
(45) Veröffentlichungstag und Bekanntmachung des Hinweises auf die Patenterteilung: **26.10.2005**
(21) Anmeldenummer: 97113368.1
(22) Anmeldetag: 02.08.1997
(51) Int. Cl.: B62D 5/06, F04D 13/02

(54) **Anordnung für eine elektrohydraulische Druckversorgung für eine Hilfskrafteinrichtung in einem Kraftfahrzeug**
Device for an electrohydraulic power supply for a power steering system in a motor vehicle
Dispositif pour alimentation de pression électro-hydraulique pour une direction assistée d'un véhicule automobile

(30) Priorität: 31.08.1996 DE 19635411
(43) Veröffentlichungstag der Anmeldung: 04.03.1998
(73) Patentinhaber: SIEMENS AKTIENGESELLSCHAFT, 80333 München (DE)
(72) Erfinder: Schröder, Hans-Joachim, 65189 Wiesbaden (DE)

(56) Entgegenhaltungen:
- WO-A-93/00513
- DE-A- 4 231 784
- DE-U- 29 606 135

## Beschreibung

Die Erfindung betrifft eine Anordnung für eine elektrohydraulische Druckversorgung für eine Hilfskrafteinrichtung in einem Kraftfahrzeug gemäß dem Oberbegriff des Patentanspruchs 1.

In der Kraftfahrzeugtechnik ist es hinlänglich bekannt, mittels hydraulischer Fremdenergien, Hilfskraftsysteme zu realisieren. Zur Unterstützung der Arbeitsweise der Vorrichtung wird Drucköl in einem geschlossenen Pumpenkreislauf gefördert, wobei die Pumpe mittels eines Elektromotors angetrieben wird.

Die Pumpe ist in einem Öltank angeordnet, wobei die Pumpenwelle in zwei Pumpenlagern gehalten ist. Auch die Welle des Elektromotors ist in zwei Motorlagern gehalten.

Aus der DE 296 09 701 U1 ist ein elektrohydraulisches Motorpumpenaggregat bekannt, bei welchem der Elektromotor mit einer stehenden Welle und die Ölpumpe mittels einer Hilfswelle angetrieben wird, wobei die Hilfswelle mit der stehenden Welle gekuppelt ist.

Die DE 43 20 692 A1, die dem Oberbegriff des Anspruchs 1 entspricht, zeigt ein hydraulisches Pumpenaggregat, bei welchem der Elektromotor und die Pumpe über eine Tragplatte miteinander verbunden sind. In die Tragplatte sind Verbindungskanäle für Austritt und Rücklauf des hydraulischen Mediums eingearbeitet. Darüber hinaus ist an der Tragplatte eine hydraulische Steuereinheit angeordnet.

Insbesondere bei Kraftfahrzeugen der Zukunft, welche für den Stadtverkehr vorgesehen sind, steht immer weniger Bauraum für die Fahrzeugaggregate zur Verfügung. Auch diese Fahrzeuge sollen trotzdem komfortabel bedienbar sein.

Der Erfindung liegt somit die Aufgabe zugrunde, eine Anordnung für eine elektrohydraulische Druckversorgung für Hilfskrafteinrichtungen anzugeben, die auch in kleinen baulichen Einheiten eingesetzt werden können und eine gute Abfuhr der von der Steuerelektronik erzeugten Wärme gewährleistet.

Erfindungsgemäß wird die Aufgabe durch die Merkmale des Patentanspruchs 1 gelöst.

Die Erfindung hat den Vorteil, daß ein platzsparendes elektrohydraulisches Pumpensystem entsteht, bei welchem keine radialen Kräfte vom Motor auf die Pumpe übertragen werden. Somit ist eine zuverlässige Arbeitsweise des Aggregats gewährleistet. Hinzu kommt eine optimale und kurze Schlauchverlegung für die Hydraulik, da das Aggregat nicht mehr vom Einbauort des Antriebmotors abhängt.

Aufgrund der wärmeleitenden Verbindung der Motorelektronik mit dem Adapter, wird die Wärme, die von der Leistungselektronik der Motorelektronik abgegeben wird, durch den durch den Adapter geförderten Ölstrom abgeführt. Insbesondere, wenn der Adapter aus Metall besteht, wird dieser Effekt noch weiter erhöht. Auf eine zusätzliche Kühlung wie z.B. Kühlbleche kann dann verzichtet werden.

Die Bauform kann weiter verkleinert werden, wenn das zentrale Lager an der dem Adapter zugeordneten Seite des Elektromotors angeordnet ist.

Bei dieser Anordnung erscheint das elektrohydraulische Pumpensystem nach außen als eine erschütterungsunempfindliche Einheit.

Darüber hinaus ist die Anzahl der mechanischen Bauteile (Klemmen, Verbinder, Anschraubpunkte) reduziert. Es wird kein Kabelsatz zur Verbindung von Elektromotor und Elektronik benötigt.

Besonders vorteilhaft ist es dabei, wenn die Motorelektronik ein Hybrid-Bauteil ist, welches an der dem Adapter zugewandten Seite des Elektromotors angeordnet ist und mit dem Adapter wärmeleitend verbunden ist.

Insbesondere bei der Verwendung von mechanisch-elektronisch kommutierten Motoren ist eine direkte Kontaktierung der Kohlebürsten des Elektromotors mit der Elektronik möglich, wobei auf lange Kabelführungen verzichtet werden kann.

Die Erfindung läßt zahlreiche Ausführungen zu. Eines davon soll anhand der in der Zeichnung dargestellten Figuren näher erläutert werden.

Es zeigt:
- Figur 1:: Anordnung zur Ansteuerung einer elektrohydraulischen Druckversorgung,
- Figur 2:: erfindungsgemäße Pumpenanordnung,
- Figur 3:: Motorelektronik am Adapte,
- Figur 4:: Kupplung zwischen Motor- und Pumpenwelle

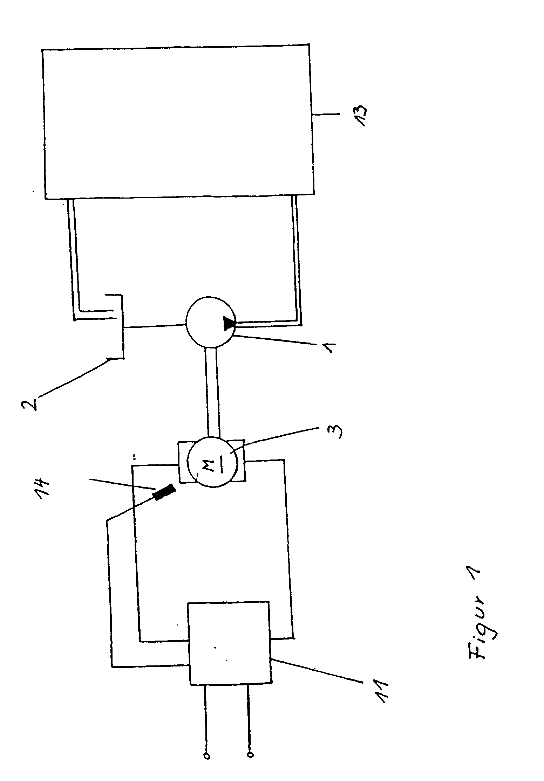

In Figur 1 ist eine elektrohydraulische Pumpenversorgung schematisch dargestellt, bei welcher eine Lenkunterstützung über den Öldruck in einem Umlaufsystem 13 realisiert wird. Um die Lenkkräfte auch bei kleiner Übersetzung niedrig halten zu können, wird die Lenkarbeit durch Drucköl unterstützt, welches in einem geschlossenen Kreislauf transportiert wird. Die Funktion einer solchen Hilfskraftlenkung ist hinreichend bekannt und muß deshalb nicht weiter beschrieben werden.

Zur Regelung des Öldruckes wird eine Pumpe 1 von einem Elektromotor 3 betrieben. Eine Drehzahlerfassungseinrichtung 14 detektiert die Motordrehzahl n des Elektromotors 3 und leitet das Signal an eine Motorelektronik 11 weiter.

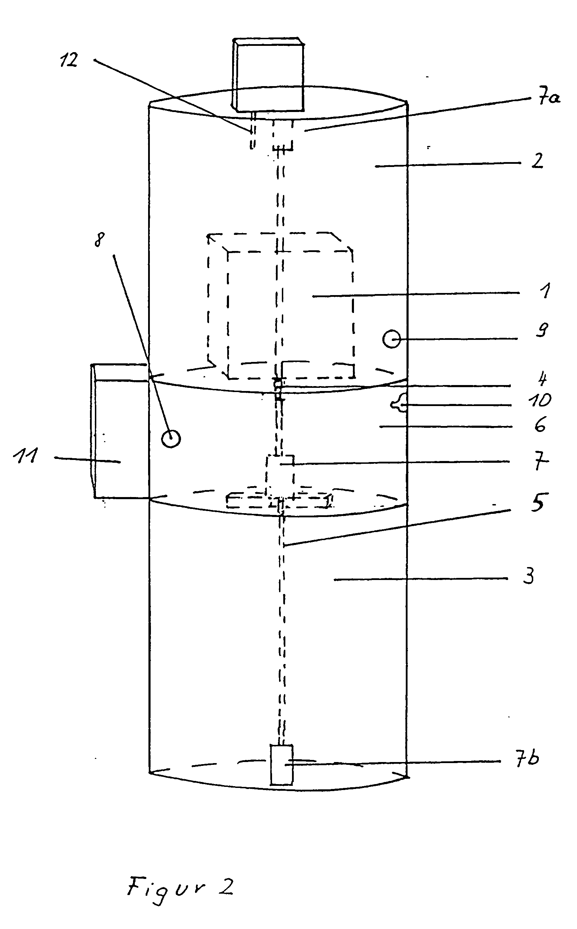

In Figur 2 ist die erfindungsgemäße elektrohydraulische Pumpenanordnung dargestellt, wie sie in einer Hilfskraftlenkung im Kraftfahrzeug Anwendung findet.

Eine Zahnradpumpe 1 ist in einem mit Öl gefüllten Kunststofftank 2 angeordnet, der einen Peilstab 12 zur Feststellung des Tankinhaltes aufweist. An den Kunststofftank 2 schließt sich ein Adapter 6 an, welcher den Elektromotor 3 mit dem Kunststofftank 2 verbindet.

Der Adapter 6 ist Teil des Tanks 2 und gegenüber diesem offen gestaltet, so daß das Öl den Adapter 6 vollständig ausfüllt. Durch im Adpater 6 angeordnete, nicht weiter dargestellte Strömungsschlitze wird das von der Pumpe 1 bewegte Öl zu einer Austrittsöffnung 8 am Adapter 6 transportiert und in ein Leitungssystem gedrückt, welches mit der Lenkung in Verbindung steht.

Zur drucklosen Rückführung des Drucköls von der Lenkung ist am Kunststofftank 2 eine Rücklauföffnung 9 vorgesehen. So kann das Öl von der Pumpe 1 erneut zur Lenkung transportiert werden.

Die Pumpe 1 wird durch den Elektromotor 3 angetrieben. Die Kraftübertragung vom Elektromotor 3 auf die Pumpe 1 erfolgt über die Welle 5 des Elektromotors 3, die in einem zentralen Lager 7 mit der Pumpenwelle 4 gekuppelt ist. Das zentrale Lager 7 ist platzsparend im Adapter 6 angeordnet. Entgegengesetzt zum Adapter 6 weist die Pumpe 1 ein weiteres Lager 7a und der Elektromotor ein weiters Lager 7b auf.

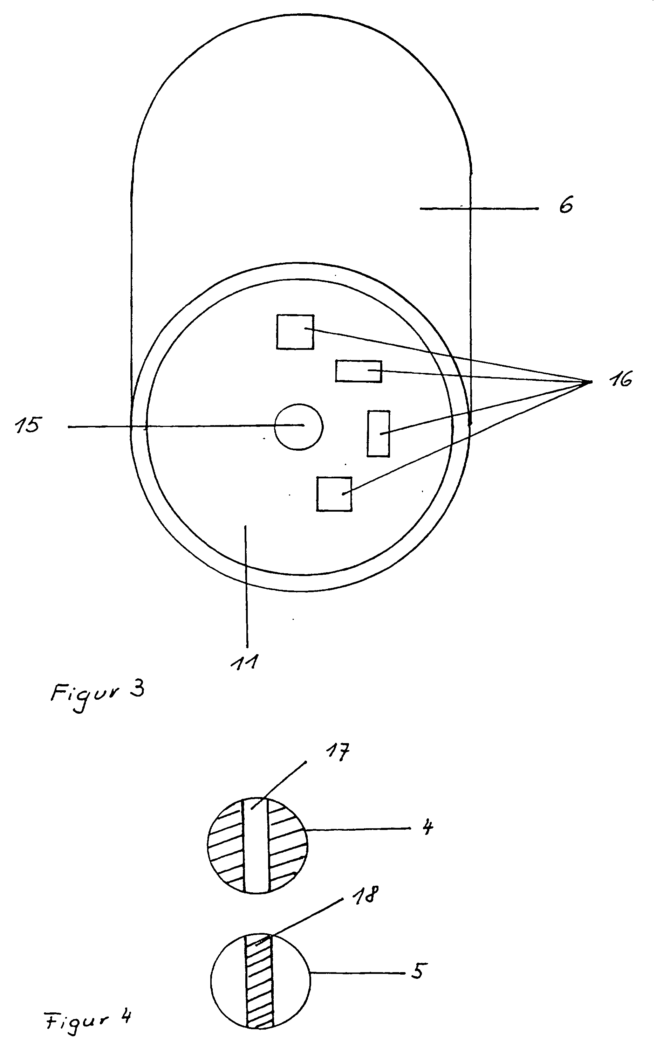

Die Kupplung der beiden Wellen erfolgt dabei in einfachster Weise in dem ein Mitnehmer 17, der an der Stirnseite der Pumpenwelle 4 angeordnet ist in einem passenden Schlitz 18 an der Stirnseite der Motorwelle 5 eingreift (Fig. 4).

Der Kunststofftank 2, Adapter 6 und Motor 3 bilden nach außen eine zylinderförmige Einheit.

Eine Leistungselektronik 11 ist an der Außenwand des Adapters 6 so angebracht, daß die durch die Leistungselektronik 11 erzeugte Wärme von dem im Adapter befindlichen Öl aufgenommen wird, das Öl im Kraftfahrzeug transportiert und dort abgekühlt wird.

Die Leistungselektronik 11 ist ein Dickschicht-Hybrid-Bauteil, dessen Leiterplatte mit ihrer den Bauelementen 16 abgewandten und elektrisch isolierten Seite an der Wandung des Adapters 6 anliegt.

In einer anderen Ausführung besitzt das Hybrid-Bauteil 11 eine kreisförmige Grundfläche, die der Grundfläche des Elektromotors und des Adapters entspricht. Das Hybrid-Bauteil 11 ist am Adapter 6 an der dem Elektromotor zugewandten Seite so montiert, daß die keine Bauelemente tragende Leiterplattenseite direkt an der eben gestalteten Unterseite des Adapters 6 anliegt und dadurch die Wärmeabfuhr gewährleistet ist. Das Hybrid-Bauteil 11 ist in einer Aussparung des Elektromotors versenkt angeordnet. Dabei ist die Motorwelle 5 durch eine mittige Öffnung 15 des Hybrid-Bauteils geführt (Figur 3).

## Patentansprüche

1. Anordnung für eine elektrohydraulische Druckversorgung für eine Hilfskrafteinrichtung in einem Kraftfahrzeug, bei welcher durch eine von einem Elektromotor (3) angetriebenen Pumpe (1), die in einem mit Öl gefüllten Behälter (2) angeordnet ist, das Öl durch eine Austrittsöffnung (8) zur Hilfskrafteinrichtung geleitet und von der Hilfskrafteinrichtung über eine Rücklauföffnung (9) in den Behälter (2) zurückgeführt wird, wobei eine Welle (5) des Elektromotors (3) mit einer Welle (4) der Pumpe (1) gekuppelt ist und ein Adapter (6) den Behälter mit dem Elektromotor verbindet, wobei eine Motorelektronik (11) an der Außenwand des Adapters (6) angeordnet ist, **dadurch gekennzeichnet, dass** die Welle (5) des Elektromotors und die Welle (4) der Pumpe in einem zentralen Lager (7) gekuppelt sind und das zentrale Lager (7) in dem, mit der Motorelektronik (11) wärmeleitend verbundenen Adapter (6) angeordnet ist, wobei der Adapter (6) Teil des Behälters ist und das Öl den Adapter (6) vollständig ausfüllt.

2. Anordnung nach Anspruch 1, **dadurch gekennzeichnet, dass** das zentrale Lager (7) an der dem Adapter (6) zugeordneten Seite des Elektromotors (3) angeordnet ist.

3. Anordnung nach Anspruch 1, **dadurch gekennzeichnet, dass** die Motorelektronik ein Hybridbauteil ist, welches an der dem Adapter (6) zugewandten Seite des Elektromotors (3) angeordnet ist und mit dem Adapter (6) wärmeleitend verbunden ist.

## Claims

1. Arrangement for electrohydraulic pressure supply for a booster device in a motor vehicle, in which arrangement, by means of a pump (1) driven by an electric motor (3) and arranged in an oil-filled tank (2), the oil is conducted through an outflow orifice (8) to the booster device and is returned from the booster device into the tank (2) via a return orifice (9), a shaft (5) of the electric motor (3) being coupled to a shaft (4) of the pump (1), and an adapter (6) connecting the tank to the electric motor, motor electronics (11) being arranged on the outer wall of the adapter (6), **characterized in that** the shaft (5) of the electric motor and the shaft (4) of the pump are coupled in a central bearing (7), and the central bearing (7) is arranged in the adapter (6) connected heat-conductively to the motor electronics (11), the adapter (6) being part of the tank, and the oil completely filling the adapter (6).

2. Arrangement according to Claim 1, **characterized in that** the central bearing (7) is arranged on that side of the electric motor (3) which is assigned to the adapter (6).

3. Arrangement according to Claim 1, **characterized in that** the motor electronics are a hydrid component which is arranged on that side of the electric motor (3) which faces the adapter (6), the said hybrid component being connected heat-conductively to the adapter (6).

## Revendications

1. Dispositif électro-hydraulique pour l'alimentation en pression d'un système d'assistance dans un véhicule automobile, dans lequel, grâce à une pompe (1) entraînée par un moteur électrique (3), laquelle est montée dans un réservoir (2) rempli d'huile, l'huile est transportée, à travers une ouverture de sortie (8), vers le système d'assistance et est ramenée, par l'intermédiaire d'une ouverture de retour (9), du système d'assistance vers le réservoir (2), où un arbre (5) du moteur électrique (3) est accouplé à l'arbre (4) de la pompe (1) et un adaptateur (6) relie le réservoir avec le moteur électrique, où un système électronique (11) du moteur est disposé sur la paroi extérieure de l'adaptateur (6), **caractérisé par le fait que** l'arbre (5) du moteur électrique et l'arbre (4) de la pompe sont accouplés dans un palier central (7) et que le palier central (7) est disposé dans l'adaptateur (6) relié, de telle sorte qu'il y ait conduction thermique, au système électronique (11) du moteur, l'adaptateur (6) faisant partie du réservoir et l'huile remplissant complètement l'adaptateur (6).

2. Dispositif selon la revendication 1 **caractérisé par le fait que** le palier central (7) est disposé sur le côté du moteur électrique (3) correspondant à l'adaptateur (6).

3. Dispositif selon la revendication 1 **caractérisé par le fait que** le système électronique du moteur est un constituant hybride disposé sur le côté du moteur électrique (3) tourné vers l'adaptateur (6) et relié, de telle sorte qu'il y ait conduction thermique, à l'adaptateur (6).
